# EUROPEAN PATENT APPLICATION

(11) **EP 2 107 733 A1**
(43) Date of publication of application: **07.10.2009**
(21) Application number: 08251231.0
(22) Date of filing: 31.03.2008
(51) Int. Cl.: H04L 12/56

(54) **Admission control and routing in a packet network**

(71) Applicant: British Telecommunications Public Limited Company, London Greater London EC1A 7AJ (GB)
(72) Inventor: The designation of the inventor has not yet been filed
(74) Representative: Geffen, Nigel Paul

(57) **Abstract**

Embodiments of the invention provide a network management sub-system which is preferably logically separate from the routing nodes (including gateway nodes) of a network. The network management sub-system receives load information relating to present packet flows on existing predetermined paths in the network , and when a request for admittance of a new packet flow is received, is able to make a decision as to whether the new flow should be both: i) admitted to the network; and ii) on to which path; in substantially the same process step. This is possible because the admission control and routing algorithms are integrated into a single process, the result of which provides both an admission control decision as well as a routing decision at the same time. By performing such an operation in a management subsystem which is separate from the routing nodes, there is no need for such functionality to be duplicated in nodes across the network, and instead the routing nodes are relieved of the burden of having to make such decision themselves. As a consequence, the network nodes can be kept simpler, and network control can be retained by the network operator in the management sub-system.

## Description

### Technical Field

The present invention relates to a method and system for performing admission control and routing in a packet network. In preferred embodiments, the present invention relates to an admission control and routing method and system wherein both admission control and route selection can be performed at the same time, in a management sub-system.

### Background to the Invention and Prior Art

Internet protocol networks are handling increasing volumes of data, with the data being of different types. For example, potential high value Internet services, such as voice and video, generate mostly constant bit-rate, inelastic traffic which is difficult to adapt to a change in network environment. Such traffic competes for bandwidth with data transfers, such as email and the like, which are much more reactive to changing network conditions. When congestion occurs, all traffic to a congested node is affected, meaning that packets can then be lost at the node. The consequences of packet loss for a particular data stream can vary, depending on the type of the stream. For voice-over-IP (VoIP), telephony, and video applications, packet losses manifest themselves as artefacts in the received audio or video, such as the audio breaking up, or videos having the image freeze.

It has therefore long been known that to try and protect high value Internet services, such as voice and video, a quality of service (QoS) mechanism is required, to try and guarantee the level of network service to such high value streams. For example, the Differentiated Services (DiffServ) architecture allows packet streams to be distinguished amongst different classes, and for a different quality of service to be offered to each packet class. High value services such as voice-over-IP, video, and the like will be placed in a higher class with a higher quality of service than lower value services. The Internet protocol header contains the DiffServ code point (DSCP), to allow an IP datagram to be categorised into the particular classes for use with a DiffServ architecture.

Another technique which has been applied is to control admission of data flows into a network, so as to only admit a sufficient number of data flows for which the network has capacity. This is known as admission control. In this field, recently measurement-based admission control (MBAC) has been of interest. One particular MBAC solution is known as pre-congestion notification (PCN) which has been developed by the Congestion and Pre-congestion Notification working group of the Internet Engineering Taskforce. A description of the present status of PCN can be found at http://tools.ietf.org/html/draft-ietf-pcn-architecture-03.

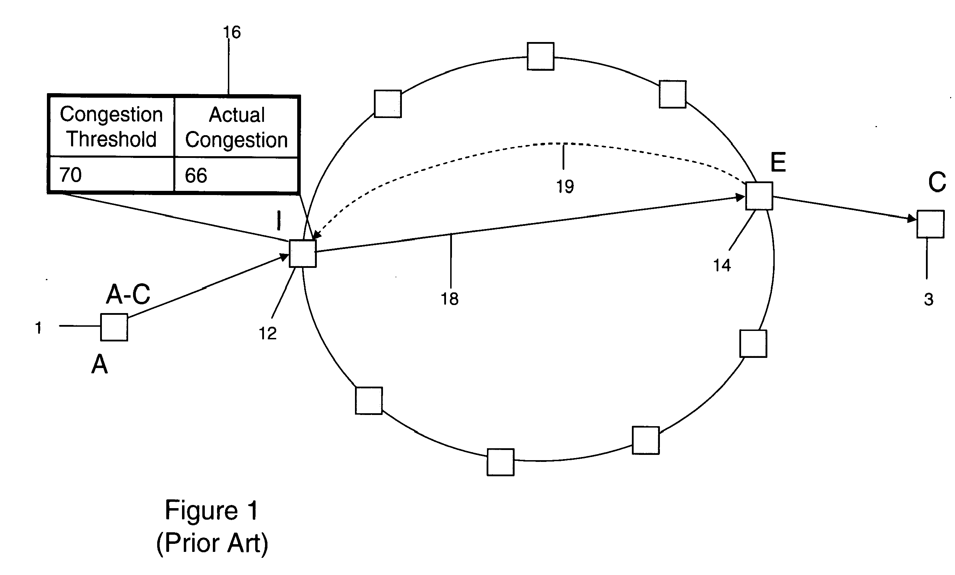

The basic idea of PCN is to control the admission of flows to a region of the network by means of a periodic measurement of the congestion level between two edges of that region. Congestion signals are propagated throughout the network towards egress nodes, as shown in Figure 1. In particular, here it will be seen that as a flow 18 propagates from an ingress node 12 towards an egress node 14, congestion signals can be added to the flow 18 which are then measured at the egress node 14 and fed back to the ingress node 12. Explicit congestion notification (ECN), as described in IETF RFC 3168, is used to add congestion marks to the DiffServ code point of the IP packets on flow 18 so as to propagate a congestion notification signal downstream to the egress node. The egress node measures the receipt of congestion marks in the packets which it receives in the flow, and feeds back information as to the level of congestion on path 18 to the ingress node 12, as congestion information 19.

When a new flow arrives at ingress node 12 this node compares the current congestion level which has been experienced with a preconfigured threshold stored in table 16, and a new flow is admitted only when the actual congestion which has been experienced is lower than the preconfigured congestion threshold. With the values shown in table 16 of Figure 1, a new flow would be admitted.

One of the problems with the prior art PCN mechanism is that it concentrates solely on admission control, and does not take into account the actual path that a flow takes through a network. For example, it may be that only a subset of paths through a network are in fact very heavily congested, with the remainder of the paths being only lightly congested. However, depending on the congestion thresholds chosen, and the congestion measurements used, the heavily congested paths may influence the overall congestion measurement to the extent that flows are rejected, even though there is in fact capacity on some of the paths. However, only by taking into account both path routing and admission control at the same time, can this problem be addressed.

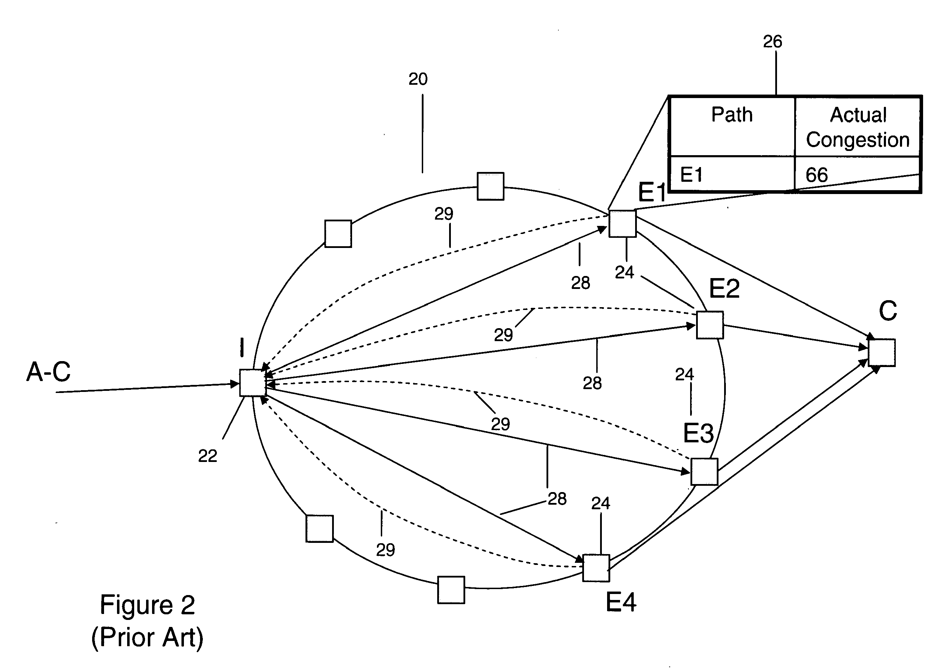

One piece of prior art which performs admission control and routing simultaneously is US 6,778,496 B, issued to Lucent. Within the Lucent patent, an admission control and load balancing technique is described which allows for congestion information to propagate from the ingress node of a network down to the egress node. The congestion information is in the form of a cost metric which is updated as the cost packet travels along the path. The cost metric packet is received at the egress gateways, and can be used for an admission control decision at the egress gateways by comparing the cost metric thus determined with a constant admission threshold, and admitting new flows into the network if the cost metric is less than the admission threshold. The admission control decision must then be communicated to the ingress nodes. Figure 2 illustrates a simplified version of such a scheme. Here, cost metric packets (referred to in Lucent as "path utilisation status messages") propagate through the network from an ingress node to egress nodes, collecting cost information along the way. Admission control decisions can then be taken at the egress nodes by comparing the measured cost with the threshold. Additionally, path selection through the network can also be performed at the same time by selecting the most appropriate path based on the cost metrics thus found.

Whilst Lucent therefore integrates the admission control and multipath routing decision, it continues to have some drawbacks due to the particular implementation used. For example, the admission control and routing decision in Lucent is made at the egress node, which introduces a time lag between the determination of the path at the egress node and the availability of this information at the ingress node. Additionally, each egress node is required to be able to make the path determination, which results in increased complexity at each egress node. For large networks with many egress nodes, the cost of upgrading each egress node to perform such functionality may be prohibitive. Finally, because Lucent depends upon a constant admission control threshold, the problem noted previously can still be found, that the threshold may be set incorrectly so as to cause some flows to be refused, when in fact they could be admitted. It would therefore be preferable for a further, more intelligent, admission control and multipath routing technique to be found which does not have the drawbacks of the prior art.

### Summary of the Invention

Embodiments of the invention provide a network management sub-system which is preferably logically separate from the routing nodes (including gateway nodes) of a network. The network management sub-system receives load information relating to present packet flows on existing predetermined paths in the network , and when a request for admittance of a new packet flow is received, is able to make a decision as to whether the new flow should be both: i) admitted to the network; and ii) on to which path; in substantially the same process step. This is possible because the admission control and routing algorithms are integrated into a single process, the result of which provides both an admission control decision as well as a routing decision at the same time. By performing such an operation in a management subsystem which is separate from the routing nodes, there is no need for such functionality to be duplicated in nodes across the network, and instead the routing nodes are relieved of the burden of having to make such decisions themselves. As a consequence, the network nodes can be kept simpler, and network control can be retained by the network operator in the management sub-system.

In view of the above, from a first aspect there is provided a method of integrated admission control and routing in a packet communications network, comprising the steps: receiving, at a network management sub-system, load information relating to present packet flows on network paths from ingress nodes to egress nodes of the network; receiving, at the network management sub-system, a request for admittance of a new packet flow on to the network; and determining, in dependence on the received load information, which network path, if any, the requested new packet flow should be admitted to; whereby the network management sub-system performs both admission control and routing of the new packet flow in substantially the same process step. The first aspect of the invention incorporates the advantages discussed above.

In a preferred embodiment the network management sub-system is logically separate from any of the network router nodes, and the network nodes signal the congestion information to the network management sub-system. Thus, only one entity need to be maintained to perform admission control and routing, and closer control by the network operator is possible.

In one embodiment the network management subsystem computes a measure of spare capacity on each of the paths in the network from the load information, and the admission control and routing determination is performed in dependence on the computed spare capacities. This allows the network capacity to be used more effectively.

In the preferred embodiment preferably the network management sub-system stores a respective value measure for different types of packet flow, the value measures representing the value to the network operator of admitting a flow of each type to the network. The determining step is then further performed in dependence on the value measure for the type of the requested new packet flow. This allows for admission control decisions to be made on the basis of a "cost versus value" comparison, in that the cost of admitting the new flow in terms of the congestion in the network can be compared against the value to the network operator of admitting the flow. By applying admission control on such a "cost versus value" basis, then some high-value flows which would otherwise have been refused admittance may be admitted, and value to the network operator can be increased.

In a preferred embodiment, the network management subsystem determines a congestion measure of the congestion on substantially each path from the load information, and the admission control and routing determination is performed in dependence on the congestion measure. By consistently making admission control decisions on such a basis it can be mathematically shown that the cost of a new flow in terms of congestion becomes equal to its shadow price, which is the cost to other users of admitting the flow.

In the preferred embodiment the determining step comprises selecting a path with the lowest congestion measure, and the new packet flow is admitted on to the selected path if the maintained value for the type of the new packet flow is greater than the congestion measure of the selected path. This is one example of how cost can be compared to value in making an admission control decision.

In another embodiment the management sub-system stores, for the different types of packet flow, a respective value measure for each type of flow when carried by each path in the network, and wherein the determining step comprises selecting a path which maximises excess path value, being the difference between the value of the flow to be admitted when carried by a path, and the congestion measure of that path. This is a second type of cost vs value comparison which may be used.

By introducing the concept of "value" into admission control then a further network control variable is introduced which is open to variation by the network operator. For example, in some embodiments different sets of value measures may be maintained for different users, or different sets of value measures are maintained at different times of day. Various combinations of value measure changes are possible. What this allows the operator to do is to favour a particular customer over others, or favours different call types over others, depending on the relative call values which are set.

In some embodiments of the invention the packet communications network is an Internet Protocol network. However, in other embodiments other network types may be used, such as , for example, an MPLS network, or an Ethernet. Other network types may also be used.

From a second aspect there is also provided a network management sub-system for performing integrated admission control and routing in a packet communications network, comprising: a first signalling input which in use receives load information relating to present packet flows on network paths from ingress nodes to egress nodes of the network; a second signalling input which in use receives a request for admittance of a new packet flow on to the network; and a controller which determines, in dependence on the received load information, which network path, if any, the requested new packet flow should be admitted to; whereby the network management sub-system performs both admission control and routing of the new packet flow in substantially the same process step.

In the second aspect the same advantages are obtained as described above in respect of the first aspect.

### Brief Description of the Drawings

Further features and advantages of the present invention will become apparent from the following description of embodiments thereof, presented by way of example only, and by reference to the accompanying drawings, wherein like reference numerals refer to like parts, and wherein: -
Figure 1 is a diagram of an example measurement-based admission control arrangement of the prior art;
Figure 2 is a diagram of another measurement-based admission control arrangement of the prior art;
Figure 3 is a diagram of a network which makes use of an admission control and routing arrangement according to a first embodiment of the present invention;
Figure 4 is a flow diagram of part of the operation of the admission control and routing arrangement according to a first embodiment of the present invention;
Figure 5 is a flow diagram according to another part of the operation of the admission control and routing arrangement according to the first embodiment;
Figure 6 is a diagram of a network which makes use of an admission control and routing arrangement according to a second embodiment of the present invention;
Figure 7 is a flow diagram of part of the operation of the admission control and routing arrangement according to a second embodiment of the present invention; and
Figure 8 is a flow diagram according to another part of the operation of the admission control and routing arrangement according to the second embodiment

### Description of the Embodiments

### Embodiments of the invention will now be described

In the embodiment of the invention to be described first we implement admission control and path selection based on indications related to the present network load, but instead of relying on fixed thresholds, in the embodiment of the present invention the concept of session "value" is introduced, which can then be compared to measures of the network load or congestion. More particularly, in the embodiment of the present invention a value structure is first assigned to sessions to be admitted. This would typically be defined by the network operator. In particular, to each session the network operator assigns a particular value representing the value to the operator of accepting (instead of rejecting) a session. A different value can be applied for different types of sessions, or for different types of customers. The same type of session may be applied a different value at a different time. For example, a voice call which was an emergency call (e.g. to 999, or 911) could always be given a high value.

When a session request is received the value assigned to that session is compared to measures of present network load or congestion in the network at the present time, such as, in preferred embodiments, congestion cost. If the value of the session exceeds the cost then the session is accepted; otherwise it is rejected. It is possible to show mathematically that, provided this strategy is used for all session requests, then, when demand exceeds supply for a given resource, the congestion measurement for that resource rises to become equal to its shadow price. Here, in a model of a capacity constrained network, the shadow price of a capacity constraint is the cost to other users of using one unit of capacity. If more high value calls are seeking admission to a link, then they will push the congestion cost higher than low value calls could (because the low value calls are preferentially rejected). Thus although the congestion costs are simple functions of congestion they also (at equilibrium) automatically reflect the value of the calls (actually the marginal value) congesting the link.

Congestion measurements can therefore be used to provide a "cost" (to other users) of admitting the flow to the network, which can then be compared against the "value" (to the network operator) of admitting the flow during the admission control evaluation. Additionally, this "cost" vs. "value" comparison can be used for path selection, as well as any other resource management decision. In other embodiments, instead of using congestion cost measures, other measures may be used, based on the present load in the network.

In terms of where the admission control and routing decision is made, in the above described prior art, admission control and routing decisions are made at the egress nodes. However, in the present embodiments of the invention, the admission control and path selection decision can be performed at a separate entity, which we will refer to in this embodiment as a management subsystem. The advantages of this are that only one such entity need have the capability to perform the admission control and routing decisions, and hence closer control of this important function can be retained by the network operator.

In particular implementations of the embodiments, for example with networks which make use of the IP multimedia subsystem (IMS) defined, for example, in 3GPP TS 23.228 version 7.0.0, the management subsystem may, for example, be the service based policy decision functions (SPDF) contained within the network resource and admission control subsystem (RACS). In wire line networks the RACS is the access resource and admission control function (A-RACF), which may be the management subsystem. In other networks, for example those based on ITU-T standards, the management subsystem could be the Resource Manager, whereas in networks according to standards generated by the MS Forum, it may be the bandwidth manager.

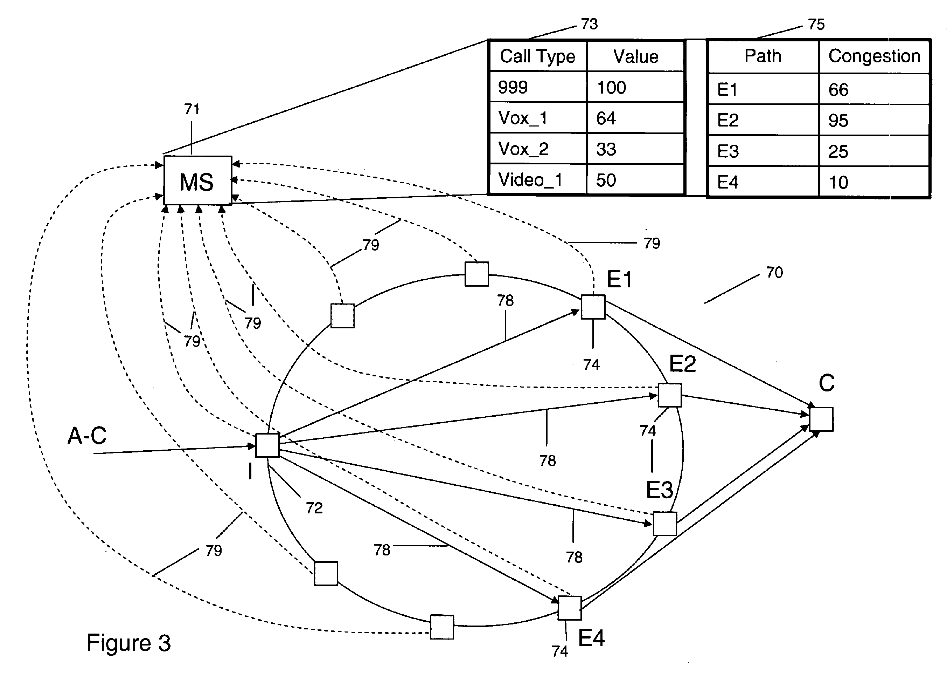

Whatever the actual management subsystem entity (and it will be understood that this depends on the network control model which is being used) typically, as shown in Figure 3 (which illustrates a network according to the present embodiments), a network 70 comprises a number of edge gateway routers, being ingress router 72, or egress routers 74 (it being understood that an ingress router for one flow may be an egress router for another flow) are provided. The network 70 also contains internal link nodes (which are not shown). From any particular ingress node 72 to a flow destination C, several paths across the network via different egress nodes may be used, as shown by paths 78, leading to egress nodes 74, E1 to E4. In this example, the paths to egress nodes E1 to E4 lead to destination node C, from ingress node 72.

A first embodiment of the invention based on the above described architecture will now be described.

Within the first embodiment in normal operation data flows across the links in the network via the paths 78. Each link in the network (actually the node that manages the link) monitors its own load status per path, and signals that status to the management subsystem 71, via a load information signalling protocol, such as, for example, the well known simple network management protocol (SNMP).

Conventionally, congestion cost information may be obtained at each gateway node as follows. That is, as data packets in a data flow travel across the network from an ingress node to an egress node then when a packet experiences congestion at a link, the link router sets a congestion mark in the packet. As explained previously, congestion marking can be performed using Explicit Congestion Notification, which sets the bits of the DiffServ code points (DSCP) in the IP header, appropriately, depending on the congestion experienced. At an egress node the congestion markings in the packets arriving at the egress node are examined and a congestion measurement can be obtained relating to the congestion on a particular path along which a packet which arrives at an egress node has travelled. A congestion measurement may typically be obtained by computing an exponentially weighted moving average (EWMA) of the number of bytes in each congested packet on each path terminating at each egress gateway.

In the present embodiment, however, it is not necessary for egress nodes to calculate the congestion measurements. This is because the load information obtained at each egress node, and also at internal link nodes within the network, is fed back to the management subsystem 71, and the management subsystem is then able to aggregate the information, and compute path congestion costs for every path, typically by adding up the load measurements for all links on a path, and by *a prior* knowledge of the path topologies and the link capacities. In this respect, a congestion measure is typically a function of both present load on a link and the link capacity. In effect, by receiving the load information from the link nodes, and knowing the path topologies and link capacities, the management sub-system can re-create the calculation conventionally performed at the egress nodes to produce a congestion cost. In other embodiments, moreover, instead of producing the same congestion cost measure as produced at an egress node, other congestion measures may be used instead.

Alternatively, where an egress node has already computed a congestion cost for a particular path terminating at the node, then this value can also or alternatively be used directly by the management subsystem.

In the present embodiment the management subsystem 71 therefore stores a table 75 of respective paths in the network, and the congestion costs presently associated with each path. As shown in the example in Figure 3, the management subsystem stores congestion cost information for each path from ingress node 72 terminating at egress node E1 to E4. Of course, in a typical implementation, the management subsystem would store many more paths than just those shown in this example, and in fact a congestion cost value would be stored for every path from each ingress node to each egress node across the network.

Additionally, the management subsystem stores, in table 70, a "value" figure for each call type which the network may be required to transport. In the same way as the first embodiment, the "value" of the call type indicates the value to the network operator of admitting the call to the network. In Figure 3 it is shown in arbitrary units, but it should be understood that the actual stored values in an implementation would be in units which correspond to the congestion cost units which are stored for each path, such that a direct comparison of value to cost can be performed. As shown in Figure 3 in table 73 several call types are stored, such as, for example, an emergency call (999), which is given an (arbitrary, in this example) value of 100, thus indicating that it is a relatively high value call. A voice call of type "vox_1" is given a value of 64, whereas a voice call of a second type, "vox_2", is given a value of 33. A video call of type "video_1" is given a value of 50. Different values can be applied for different types of sessions, or for the same type of session but for different customers. Additionally, the same type of session may have a different value applied at a different time of day. The values may be configured in advance, or may be routinely updated, by the network operator. Control of the values gives a large degree of control of the network to the network operator, as the network operator can influence which call types are admitted to the network.

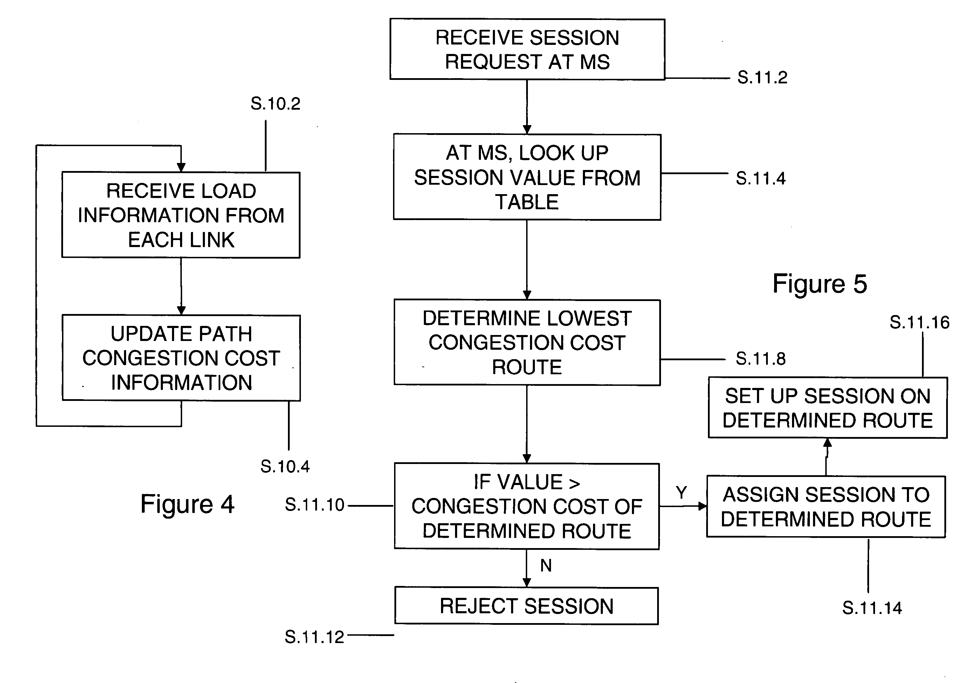

Within the embodiment, admission control and path routing is performed as shown in Figures 4 and 5. More particularly, Figure 4 illustrates a continuous routine that runs on the management subsystem, wherein when load (or congestion) information is received from each link at step 10.2, then the path congestion cost information in table 75 is updated at step 10.4. This routine runs continuously, such that the management subsystem 71 can continually update the congestion costs stored in table 75 relating to each path in the network.

Figure 5 illustrates the admission control and path selection procedure. A session request is received at the management subsystem 71, at step 11.2, to allow the management subsystem to perform the admission control decision, and routing decision. When the session request arrives at the management subsystem, at step 11.4, it looks up the session type in table 73, to determine the value of the session. Next, at step 11.8, the congestion costs stored in table 75 are examined, and those paths which are able to transport the packets of the requested flow towards its destination are examined so as to determine their congestion costs, and the path with the lowest congestion cost is selected. Next, at step 11.10, an evaluation is performed to determine whether the value of the requested session obtained from the look-up table 73 is greater than the congestion cost of the selected route, and if this is the case, then the flow should be admitted, wherein processing proceeds to step 11.4. Here, the requested session is assigned to the path with the determined lowest congestion cost, and at step 11.16 the management subsystem 71 makes the necessary control signalling to the ingress, egress, and link nodes of the network, so as to set up the requested session on the determined route.

If, on the other hand, at step 11.10 it was determined that the congestion cost of the determined route, which itself is the lowest congestion cost of all available routes for the flow, is still greater than the value of the requested flow, then the requested flow is not admitted, and the management subsystem 71 rejects the session, at step 11.12. Path selection and admission control decisions are communicated to the appropriate nodes in the network using the H.248 protocol, for example.

With such an arrangement then admission control and route selection are performed at the same time, as an integrated step. Additionally, because the embodiment is able to tailor the mix of session types it accepts depending on the congestion in the relevant resources, better use of the network is provided. For example, the invention will continue to admit high value sessions even when the network is too congested for low value ones. Additionally, the path selection algorithm always chooses the cheapest path, and hence the system is highly effective at balancing the load across resources, regardless of the typology of the network. Because congestion cost information is available to the management subsystem, the routing algorithm is able to adapt to an efficient path allocation even after dramatic topology changes, such as in the case of network node failures.

The embodiment also has a further advantage in that the admission control and routing decision can be performed at a single point in the network i.e. at the management subsystem. Thus, therefore, it is not necessary for each gateway router to have both the call session value table 73, as well as the path congestion information in table 75, as is required in the first and second embodiments. Instead, the management subsystem has oversight of all of the links in the network, and hence can store a single, master, path congestion cost table for all of the paths in the network. Additionally, because the admission control and route decision is performed centrally at the management subsystem, then only the management subsystem need store the call session value table. This makes it much easier for the network operator to update the call session values, as the update need only be performed at the management subsystem, rather than every gateway to the network. Similarly, in terms of network monitoring, the network operator can view congestion on each path in the network, from the path congestion cost information stored at the management subsystem.

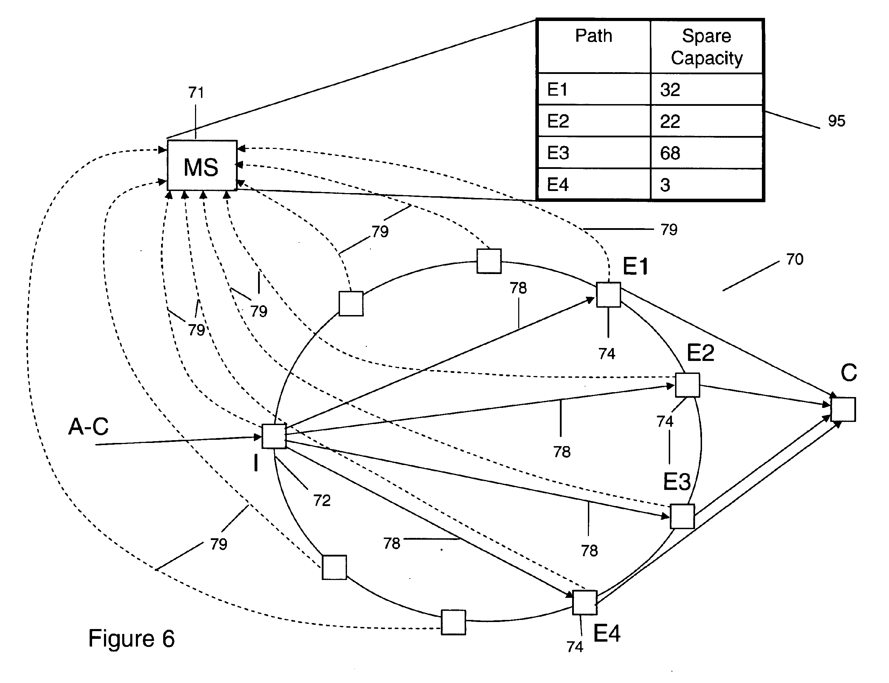

A second embodiment will now be described, with reference to Figures 6 to 8. The second embodiment of the invention is based on the same network architecture 70 as the first embodiment, further description of which will not therefore be undertaken.

In the second embodiment, the management sub-system 71 again receives load information per path from each of the link routers within the network. However, in the second embodiment, the load information is not used to calculate congestion costs, as in the first embodiment, but is instead used in combination with the management sub-system's *a priori* knowledge of the network path topology and individual link capacities to calculate the spare capacity on each path in the network. This is stored for each path in table 95, in the management sub-system 71, as shown in Figure 6. Here, it should be understood that the figures given in table 95 are arbitrary values presented by way of example only.

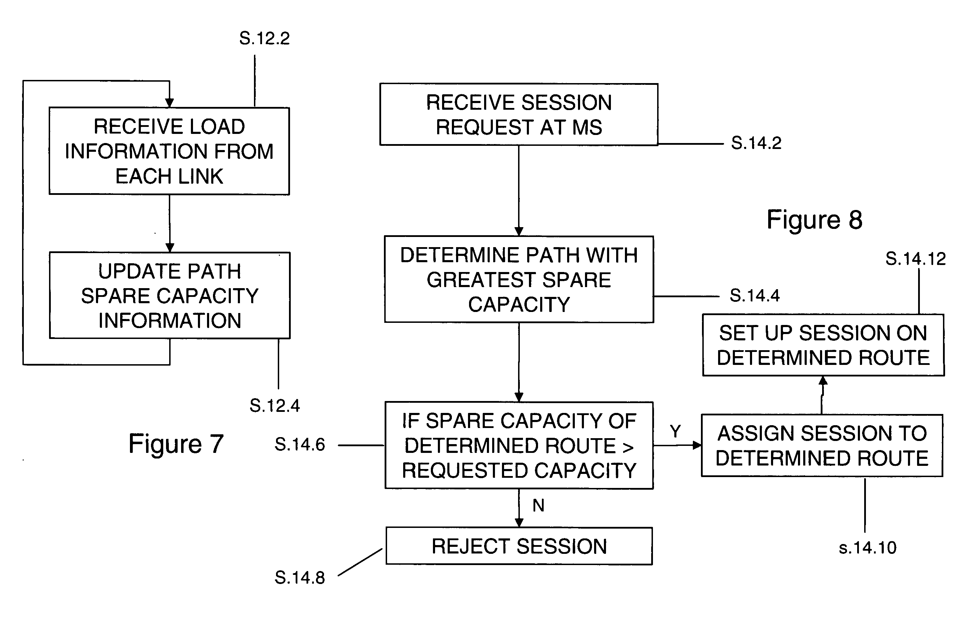

Figure 7 illustrates the routine which updates the link capacity information in table 95. More particularly at step 12.2 when load information is received from the link routers in the network, than at step 12.4 the load information for a link is subtracted from the *a prior* known capacity for link, to give the spare capacity for that link. For a path, the capacity of a path is limited by the capacity of the lowest capacity link in the path. Therefore, typically path spare capacity equates to the lowest spare capacity of any of the individual links forming a path.

When a new flow request is received at the management subsystem 71, admission control and routing is performed as shown in Figure 8. A session request is received at the management subsystem 71, at step 14.2, to allow the management subsystem to perform the admission control decision, and routing decision. When the session request arrives at the management subsystem, at step 14.4, those paths which are able to transport the packets of the requested flow towards its destination are examined so as to determine their spare capacities, and the path with the largest spare capacity is selected. Next, at step 14.6, an evaluation is performed to determine whether the spare capacity available on the determined path is greater than the capacity requested by the new flow, and if this is the case, then the flow should be admitted, wherein processing proceeds to step 14.10. Here, the requested session is assigned to the path with the determined greatest spare capacity, and at step 14.12 the management subsystem 71 makes the necessary control signalling to the ingress, egress, and link nodes of the network, so as to set up the requested session on the determined route.

If, on the other hand, at step 14.6 it was determined that the spare capacity available on the determined path is less than the capacity requested by the new flow, then the requested flow is not admitted, and the management subsystem 71 rejects the session, at step 14.8. Path selection and admission control decisions are communicated to the appropriate nodes in the network using the H.248 protocol, for example.

In the second embodiment, therefore, the admission control and routing decision is performed at the management sub-system based on the spare capacity of the paths, which the management subsystem is able to calculate based on the load information passed to it from the link routers, and its *a prior* knowledge of the path topologies and link capacities. Thus, the capacity of the network can be utilised to its fullest extent, due to the admission control and routing decision being performed in an integrated manner.

Various modifications may be made to the above described embodiment to produce further embodiments, as described next.

In the above described first embodiment, it was described how the management subsystem may calculate a congestion costs in the same manner as the egress nodes e.g. using an EWMA. However, in other embodiments this need not be used, and other congestion measures may be calculated from the load information received from the links.

Similarly, in the second embodiment described above, the ioad information was used to calculate spare capacity. However, in other embodiments other measures may be calculated in dependence on the load information, and on which the admission control and routing decision may be taken.

In a further embodiment based on a combination of the first and second embodiments, the value of the new packet flow may be compared against a function of the spare capacity of the available paths. This would allow the advantages of the first embodiment in respect of considering the value of the incoming new flows to be obtained, whilst using a different measure than congestion, such as spare capacity. I

The embodiments described above have been described generally in the context of being Internet Protocol (IP) networks, although it should be understood that the invention is not so limited, and in other embodiments of the invention other network protocols may be used. For example, the invention may also be used, in MPLS networks, as well as Ethernet networks, amongst others.

Further modifications, including additions, and/or deletions will be apparent to the person skilled in the art, and which may be made to the above described embodiments to provide further embodiments, any and all of which are intended to fall within the appended claims.

## Claims

1. A method of integrated admission control and routing in a packet communications network, comprising the steps:
receiving, at a network management sub-system, load information relating to present packet flows on network paths from ingress nodes to egress nodes of the network;
receiving, at the network management sub-system, a request for admittance of a new packet flow on to the network; and
determining, in dependence on the received load information, which network path, if any, the requested new packet flow should be admitted to;
whereby the network management sub-system performs both admission control and routing of the new packet flow in substantially the same process step.

2. A method according to claim 1, wherein the network management sub-system is logically separate from any of the network router nodes, and the network nodes signal the load information to the network management sub-system.

3. A method according to claims 1 or 2, wherein the network management subsystem computes a measure of spare capacity on each of the paths in the network from the load information, and the admission control and routing determination is performed in dependence on the computed spare capacities.

4. A method according to claims 1, 2 or 3, further comprising: storing, at the network management sub-system a respective value measure for different types of packet flow, the value measures representing the value to the network operator of admitting a flow of each type to the network ; wherein the determining step is further performed in dependence on the value measure for the type of the requested new packet flow.

5. A method according to claim 4, wherein the network management subsystem determines a congestion measure of the congestion on substantially each path from the load information, and the admission control and routing determination is performed in dependence on the congestion measure.

6. A method according to claim 5, wherein the determining step comprises selecting a path with the lowest congestion measure, and the new packet flow is admitted on to the selected path if the maintained value for the type of the new packet flow is greater than the congestion measure of the selected path.

7. A method according to claim 5, further comprising storing, for the different types of packet flow, a respective value measure for each type of flow when carried by each path in the network, and wherein the determining step comprises selecting a path which maximises excess path value, being the difference between the value of the flow to be admitted when carried by a path, and the congestion measure of that path.

8. A method according to any of claims 4 to 7, wherein different sets of value measures are maintained for different users.

9. A method according to any of claims 4 to 8, wherein different sets of value measures are maintained at different times of day.

10. A network management sub-system for performing integrated admission control and routing in a packet communications network, comprising:
a first signalling input which in use receives load information relating to present packet flows on network paths from ingress nodes to egress nodes of the network;
a second signalling input which in use receives a request for admittance of a new packet flow on to the network; and
a controller which determines, in dependence on the received load information, which network path, if any, the requested new packet flow should be admitted to;
whereby the network management sub-system performs both admission control and routing of the new packet flow in substantially the same process step.
